# EUROPÄISCHE PATENTSCHRIFT

(11) **EP 3 422 854 B1**
(45) Veröffentlichungstag und Bekanntmachung des Hinweises auf die Patenterteilung: **28.08.2024**
(21) Anmeldenummer: 17707761.7
(22) Anmeldetag: 15.02.2017
(51) Int. Cl.: A01N 43/80, C09D 5/14, C09D 7/63, A01P 1/00, A01P 3/00

(54) **VERFAHREN ZUR VERMINDERUNG DES MIKROBIELLEN BEFALLS VON TECHNISCHEN PRODUKTEN**
METHOD FOR REDUCNG MICROBIAL ATTACK OF INDUSTRIAL PRODUCTS
PROCÉDÉ POUR RÉDUIRE LA COLONISATION MICROBIENNE DE PRODUITS TECHNIQUES

(30) Priorität: 01.03.2016 EP 16000487
(43) Veröffentlichungstag der Anmeldung: 09.01.2019
(73) Patentinhaber: THOR GmbH, 67346 Speyer (DE)
(72) Erfinder: BAUM, Rüdiger, 68809 Neulussheim (DE); HAHN, Peter Erich, 68626 Lampertheim (DE); SCHMIDT, Hans-Jürgen, 67346 Speyer (DE); WUNDER, Thomas, 67435 Neustadt a.d. Weinstrasse (DE)
(86) Internationale Anmeldenummer: PCT/EP2017/000211
(87) Internationale Veröffentlichungsnummer: WO 2017/148572

(56) Entgegenhaltungen:
- WO-A1-2015/082063
- WO-A1-2016/034266
- WO-A2-2007/026004
- YAZAR K ET AL: "Methylisothiazolinone in rinse-off products causes allergic contact dermatitis: a repeated open-application study", BRITISH JOURNAL OF DERMATOLOGY, JOHN WILEY, HOBOKEN, USA, vol. 173, no. 1, 28 May 2015 (2015-05-28), pages 115 - 122, XP071054157, ISSN: 0007-0963, DOI: 10.1111/BJD.13751
- LUNDOV M D ET AL: "Methylisothiazolinone contact allergy: a review", BRITISH JOURNAL OF DERMATOLOGY, JOHN WILEY, HOBOKEN, USA, vol. 165, no. 6, 17 November 2011 (2011-11-17), pages 1178 - 1182, XP071157802, ISSN: 0007-0963, DOI: 10.1111/J.1365-2133.2011.10523.X
- VENABLES Z C ET AL: "Has the epidemic of allergic contact dermatitis due to methylisothiazolinone reached its peak?", BRITISH JOURNAL OF DERMATOLOGY, JOHN WILEY, HOBOKEN, USA, vol. 177, no. 1, 29 May 2017 (2017-05-29), pages 276 - 278, XP071158264, ISSN: 0007-0963, DOI: 10.1111/BJD.15016

## Beschreibung

Die Erfindung betrifft ein Verfahren zur Verminderung mikrobiellen Befalls von Produkten, in dessen Rahmen 5-Chlor-2-methyl-4-isothiazolin-3-on mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons eingesetzt wird, das in einem nachfolgenden Verfahrensschritt zumindest weitgehend zersetzt wird. Das erfindungsgemäße Verfahren ist ferner dadurch gekennzeichnet, dass in einem weiteren Verfahrensschritt wenigstens eine weitere Komponente zur Nachkonservierung der Produkte eingesetzt wird.

Technische, insbesondere wässrige Produkte, wie Farben, Lacke, Emulsionen und kosmetische Produkte werden üblicherweise unter Verwendung natürlicher oder biologisch abbaubarer Rohstoffe hergestellt. Diese Rohstoffe und das als Lösemittel verwendete Wasser sind dabei häufig mit Keimen, wie Bakterien, Hefen und Pilzen, belastet. Verzichtet man bei der Herstellung dieser Produkte auf eine Konservierung, so können diese bereits einen Tag nach der Herstellung hohe Keimzahlen aufweisen.

Um sicher zustellen, dass diese Produkte den hygienischen Anforderungen gerecht werden und damit die Haltbarkeit der technischen Produkte gewährleistet ist, werden den Produkten so genannte Biozide hinzugegeben. Eines dieser Biozide ist das 5-Chlor-2-methylisothiazolin-3-on (CMIT). Dieses weist eine gute biozide Wirkung auf, hat aber bei der praktischen Handhabung verschiedene Nachteile. Beispielsweise kann dies Verbindung bei Personen, die damit umgehen, Allergien auslösen.

Um die Nachteile dieses zwar äußerst wirksamen, aber auch mit Nachteilen für den Endanwender behafteten CMITs zu überwinden, kommt seit Anfang der 90er Jahre die in der EP 1 005 271 B1 offenbarte Mischung der Isothiazolinone 2-Methylisothiazolin-3-on (MIT) und 1,2-Benzisothiazolin-3-on (BIT) als Biozidzusammensetzung zum Einsatz. Diese Mischung wird von der Thor GmbH (Speyer, Bundesrepublik Deutschland) als Acticide^{®} MBS vertrieben und stellt zu heutiger Zeit den Standard bei der Gebindekonservierung von wasserbasierenden Farben und Putzen dar. Diese Biozidzusammensetzung hat den Vorteil, dass sie durch die gezielte Auswahl der beiden Isothiazolinone eine hohe Wirksamkeit mit einem im Vergleich zu dem 5-Chlor-2-methylisothiazolin-3-on deutlich geringen Sensibilisierungspotential vereint.

Trotz des Ausweichens auf Acticide^{®} MBS als Alternative zu dem 5-Chlor-2-methylisothiazolin-3-on ist in den mit Acticide^{®} MBS konservierten Produkten noch immer das MIT enthalten, welches bei Allergikern beziehungsweise bei Personen mit hohem Sensibilisierungsgrad Kontaktekzeme und auch aerogene Kontaktekzeme hervorrufen kann.

Weiterhin offenbart die WO 2015/082063 A1 ein Verfahren zur Herstellung eines Beschichtungsmittels, dessen Gehalt an 5-Chlor-2-methyl-4-isothiazolon nach der Durchführung einer chemischen Zersetzung in einem Bereich von 0 bis 1 ppm liegt, und welches mit Konservierungsmitteln, ausgewählt aus der Gruppe bestehend aus 2-Methylisothiazolin-3-on, 1,2-Benzisothiazolin-3-on, N-Methyl-1,2-benzisothiazolin-3-on und 2-n-Octylisothiazolin-3-on konserviert ist.

Aufgrund der eingangs geschilderten Umstände ist jedoch ein gänzlicher Verzicht auf wirksame Konservierungsmittel nicht möglich.

Eine mögliche Lösung, wird in der veröffentlichten deutschen Patentanmeldung DE 198 10 819 A1 vorgeschlagen. Dieses Dokument befasst sich mit einem Verfahren zur Herstellung von Beschichtungsmitteln, die für auf Isothiazolinone allergisch reagierende Personen geeignet sein sollen. Im Rahmen des Verfahrens werden die Beschichtungsmittel, in dem die Isothiazolinone enthalten sind, mit Reagenzien, wie Natriumthiosulfat versetzt, die durch chemische Reaktion das/die Isothiazolinone so zersetzen sollen, so dass für allergisch reagierende Personen unbedenkliche Folgeprodukte entstehen sollen.

Nachteilig ist jedoch, dass nach dem beschriebenen Verfahren die Isothiazolinone, insbesondere das MIT nicht quantitativ bzw. irreversibel zerstört werden, wodurch diese in den Produkten und Folgeprodukten noch immer enthalten sind, und nach wie vor allergisch reagierenden Personen Probleme bereiten können, beziehungsweise bei Personen mit hohem Sensibilisierungsgrad Kontaktekzeme bzw. aerogene Kontaktekzeme hervorrufen können. So konnte im Rahmen von den Erfindern durchgeführten Versuchen gezeigt werden, dass beispielsweise in einer wässrigen Dispersionsfarbe enthaltenes 2-Methylisothiazolin-3-on mit Hilfe von Natriumthiosulfat weder quantitativ noch irreversibel zerstört werden konnte.

Eine Aufgabe der Erfindung ist es daher, ein Verfahren zur Verfügung zu stellen, mit Hilfe dessen Produkte hergestellt werden können, die auch für auf 5-Chlor-2-methylisothiazolin-3-on bzw. 2-Methylisothiazolin-3-on allergisch reagierende Personen, beziehungsweise für Personen mit hohem Sensibilisierungsgrad gegenüber 5-Chlor-2-methylisothiazolin-3-on und 2-Methylisothiazolin-3-on geeignet sind. Dabei soll im Rahmen dieses Verfahrens auf den Einsatz von 5-Chlor-2-methylisothiazolin-3-on nicht verzichtet werden.

Gelöst wird diese Aufgabe durch ein Verfahren zur Verminderung mikrobiellen Befalls eines Produktes umfassend die Schritte:
(A) Bereitstellen eines Produktes,
(B) Hinzugeben von 1 bis 100 ppm 5-Chlor-2-methyl-4-isothiazolin-3-on mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons,
(C) Zersetzen des 5-Chlor-2-methyl-4-isothiazolin-3-ons mit Hilfe wenigstens einer Verbindung, die ausgewählt ist aus der Gruppe bestehend aus Cystein, Mercaptoethanol, Mercaptopropionsäure, Methylmercaptopropionat, Glutathion, Thioglycolat, Natriumthiosulfat, Natriumbisulfit, Pyrithion, Mercaptopyridin, Dithiothreitol, Mercaptoethansulfonat, und Natrium Formaldehyd Sulfoxylat und
(D) Hinzugeben wenigstens eines Biozids ausgewählt aus der Gruppe bestehend aus 1,2-Benzisothiazolin-3-on in einer Menge von 1 bis 1.000 ppm, 2,2-Dibrom-3-nitrilpropionamid in einer Menge im Bereich von 1 bis 2.500 ppm, 2,2-Dibrommalonamid, Tetramethylolacetylendiharnstoff, Formaldehyd, Glutaraldehyd, Phenoxyethanol, 2-Brom-2-nitropropan-1,3-diol in einer Menge im Bereich von 1 bis 2.000 ppm, Zinkpyrithion in einer Menge im Bereich von 1 bis 2.500 ppm, Natriumpyrithion, Benzylalkohol, 3-Iodpropargyl-N-butylcarbamat, 2-n-Octyl-4-isothiazolin-3-on, 4,5-Dichlor-2-n-octyl-4-isothiazolin-3-on, einer Silberquelle in einer Menge im Bereich von 1 bis 500 ppm, 2-Methyl-1,2-Benzisothiazolin-3-on, Ethylhexylglycerin, 1,2-Octandiol, 1,2-Hexandiol, 1,2-Pentandiol, 1,2-Decandiol, p-Hydroxybenzoesäurepropylester, Sorbinsäure, Benzoesäure, Ascorbinsäure, Benzalkoniumchlorid, Dimethyldidodecylammoniumchlorid, Terbutryn, Diuron, Carbendazim, Tebuconazol und o-Phenylphenol, ausgenommen ein Verfahren, in dessen Rahmen zu einer konservierungsmittelfreien Styrolacrylatdispersion 20 ppm 5-Chlor-2-methylisothiazolin-3-on, mit einem Gehalt an 2-Methylisothiazolin-3-on von < 1Gew.-%, hinzugegeben werden und die so konservierte Styrolacrylatdispersion dann zur Herstellung einer Dispersionsfarbe auf Wasserbasis verwendet wird, wobei die hergestellte Farbe folgende Zusammensetzung hat:
   25,7 Gew.-% Wasser
   0,2 Gew.-% Netz- und Dispergiermittel auf Acrylatbasis
   0,2 Gew.- % Entschäumer auf Mineralölbasis
   2,0 Gew.-% Wasserenthärter (Natriumpolyphosphat)
   0,2 Gew.-% Ammoniak
   4,0 Gew.-% Titanoxid (Pigment)
   51,0 Gew.-% Calciumcarbonat (Füllstoff)
   5,0 Gew.-% Talcum (Füllstoff)
   0,4 Gew.-% % Celluloseether
   2,0 Gew.-% organisches Lösemittel zur Erniedrigung der Mindestfilmbildungstemperatur
   9,0 Gew.-% der mit 20 ppm 5-Chlor-2-methylisothiazolin-3-on konservierten Styrolacrylatdispersion
   20 ppm 5-Chlor-2-methylisothiazolin-3-on, mit einem Gehalt an 2-Methylisothiazolin-3-on von < 1Gew.-%,
   wobei nach der Herstellung der Dispersionsfarbe die Isothiazolin-3-one durch Hinzugeben von 50 ppm Cystein, bezogen auf die Dispersionsfarbe, zersetzt werden und zur Nachkonservierung, bezogen auf die Dispersionsfarbe 50 ppm 1,2-Benzisothiazolin-3-on, 100 ppm Zink-2-mercaptopyridin-N-oxid und 10 ppm Zinkoxid hinzugegeben werden.

Gemäß einer Ausfiihrungsform betrifft die vorliegende Erfindung nicht ein Verfahren in dessen Rahmen eine Dispersionsfarbe mit einem Gehalt an 50 ppm 1,2-Benzisothiazolin-3-on, 100 ppm Zink-2-mercaptopyridin-N-oxid (Zinkpyrithion) und 10 ppm Zinkoxid hergestellt wird.

Die vorliegende Erfindung ermöglicht es unter Verwendung des äußerst wirksamen 5-Chlor-2-methylisothiazolin-3-ons, die genannten Produkte während der Herstellung zu konservieren, und vor dem Inverkehrbringen so zu behandeln, dass in dem Endprodukt kein 5-Chlor-2-methylisothiazolin-3-on mehr enthalten ist, welches Personen mit einem hohem Sensibilisierungsgrad gegenüber 5-Chlor-2-methylisothiazolin-3-on Probleme bereiten könnte. Die Verwendung von 5-Chlor-2-methylisothiazolin-3-on während der Herstellung der Produkte hat den Vorteil, dass mit Hilfe dieses sehr wirkungsvollen Breitbandbiozids die durch die einzelnen Bestandteile der jeweiligen Produkte eingeschleppten Mikroorganismen wirkungsvoll inaktiviert werden können, so dass nach der gezielten Zerstörung des 5-Chlor-2-methylisothiazolin-3-ons nahezu sterile Produkte erhalten werden, die mit Hilfe von Bioziden nachkonserviert werden können.

Das Produkt, das in dem Verfahrensschritt (A) bereitgestellt wird ist allgemein ein Produkt ausgewählt aus der Gruppe bestehend aus Farben, Innenraumfarben, Lacken, Lasuren, Putzen, Innenputzen, Emulsionen, Latices, Polymerdispersionen, Ligninsulfonaten, Kreideaufschlämmungen, mineralischen Slurries, keramischen Massen, Klebstoffen, Dichtstoffen, caseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithografischen Flüssigkeiten, Verdickern, kosmetischen Produkten, Toilettenartikeln, Wasserkreisläufen, Flüssigkeiten bei der Papierverarbeitung, Flüssigkeiten bei der Lederherstellung, Flüssigkeiten bei der Textilherstellung, Bohr- und Schneidölen, hydraulischen Flüssigkeiten und Kühlschmierstoffen.

Unter dem Begriff "Produkt" sind dabei sowohl End- als auch Zwischenprodukte zu verstehen. Gemäß einer besonders bevorzugten Ausfiihrungsform der Erfindung ist das Produkt eine Polymeremulsion oder das Vorprodukt einer Innenraumfarbe oder eines Innenputzes. Vorprodukt bedeutet dabei, dass diese Produkte vor Inverkehrbringen derart behandelt werden, dass das in den Produkten enthaltene 5-Chlor-2-methylisothiazolin-3-on idealerweise quantitativ zersetzt wird.

Gemäß einer weiteren Ausführungsform der Erfindung handelt es sich bei dem Produkt um ein Produkt auf Wasserbasis. Der Wassergehalt, liegt dabei allgemein im Bereich von 5 bis 99,9 Gew.-%.

Das Produkt, das in Verfahrensschritt (A) bereitgestellt wird, ist bevorzugt dadurch gekennzeichnet, dass es einen Gehalt an 2-Methyl-4-isothiazolin-3-on im Bereich von 0 bis 1 ppm, bezogen auf das Produkt aufweist. Gemäß einer bevorzugten Ausführungsform der Erfindung weist das in Verfahrensschritt (A) bereitgestellte Produkt einen Gehalt an 2-Methyl-4-isothiazolin-3-on im Bereich von 0,1 ppm bis 0 ppm auf, gemäß einer besonders bevorzugten Ausführungsform von 0 ppm. Bedingt durch den vernachlässigbar geringen Gehalt an 2-Methyl-4-isothiazolin-3-on in dem bereitgestellten Produkt lassen sich mit Hilfe des erfindungsgemäßen Verfahrens unter Verwendung von 5-Chlor-2-methyl-4-isothiazolin-3-on mit dem vorstehend definierten Gehalt an 2-Methyl-4-isothiazolin-3-on konservierte Produkte erhalten, deren Konservierungsmittel zu jedem gewünschten Zeitpunkt auf einfache Art und Weise gezielt zersetzt werden kann, das dass hierdurch (End)-Produkte erhalten werden können, die frei von 5-Chlor-2-methyl-4-isothiazolin-3-on und 2-Methyl-4-isothiazolin-3-on sind.

Die großtechnische Herstellung von 5-Chlor-2-methylisothiazolin-3-on bzw. 2-Methylisothiazolin-3-on ist bekannt und kann auf verschiedenen Wegen erfolgen, die allesamt ein Gemisch von 5-Chlor-2-methylisothiazolin-3-on und 2-Methylisothiazolin-3-on liefern. Beispielsweise beschreibt U.S.3,849,430 A zwei Alternativen, die ein Gemisch aus 5-Chlor-2-methylisothiazolin-3-on bzw. 2-Methylisothiazolin-3-on liefern. Wie eingangs beschrieben, lässt sich das in dem Gemisch aus 5-Chlor-2-methylisothiazolin-3-on und 2-Methylisothiazolin-3-on enthaltene 2-Methylisothiazolin-3-on nicht ohne weiteres zerstören, so dass mit 2-Methylisothiazolin-3-on konservierte (End)Produkte Allergikern, bzw. Personen mit einem hohem Sensibilisierungsgrad gegenüber 2-Methylisothiazolin-3-on Probleme bereiten können. Eine Möglichkeit, diese Problematik zu Umgehen wäre ein gänzlicher Verzicht auf den Einsatz des 2-Methylisothiazolin-3-on enthaltenden 5-Chlor-2-methylisothiazolin-3-ons.

Die Vorliegende Erfindung ermöglicht jedoch den weiteren Einsatz von 5-Chlor-2-methylisothiazolin-3-on, in Form eines völlig neuartigen Gemisches, welches das 2-Methyl-4-isothiazolin-3-on im Bereich von 0 bis 2 Gew.-%, bezogen auf den Gesamtanteil des 5-Chlor-2-methyl-4-isothiazolin-3-ons, bevorzugt im Bereich von 0 bis 1 Gew.-%, jeweils bezogen auf den Gesamtanteil des 5-Chlor-2-methyl-4-isothiazolin-3-ons, enthält.

Wie vorstehend beschrieben, liefert die großtechnische Herstellung von 5-Chlor-2-methylisothiazolin-3-on bzw. 2-Methylisothiazolin-3-on immer ein Gemisch aus 5-Chlor-2-methylisothiazolin-3-on und 2-Methylisothiazolin-3-on. Während 2-Methylisothiazolin-3-on-enthaltende Biozidzusammensetzungen mit einem geringen Anteil an 5-Chlor-2-methylisothiazolin-3-on kommerziell erhältlich sind, sind 5-Chlor-2-methyl-4-isothiazolin-3-on Zusammensetzungen mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons nicht kommerziell erhältlich.

Ein Fachmann kann das 5-Chlor-2-methyl-4-isothiazolin-3-on mit dem erfindungsgemäß geforderten geringen Anteil an 2-Methyl-4-isothiazolin-3-on, das in Verfahrensschritt (B) eingesetzt wird, aus Gemischen von 5-Chlor-2-methylisothiazolin-3-on und 2-Methylisothiazolin-3-on mit Hilfe ihm bekannter Trennverfahren, wie Chromatographie, Extraktion bzw. fraktionierter Fällung herstellen. Der Fachmann kann die Reinheit des 5-Chlor-2-methyl-4-isothiazolin-3-ons bzw. dessen Gehalt in den entsprechenden Produkten mit Hilfe ihm bekannter Methoden, beispielsweise mittels quantitativer HPLC bestimmen.

Das 5-Chlor-2-methylisothiazolin-3-on mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons, wird in Verfahrensschritt (B) dem jeweiligen Produkt in einer Menge im Bereich von 1 ppm bis 100 ppm, bevorzugt im Bereich von 5 ppm bis 50 ppm, besonders bevorzugt im Bereich von 5 ppm bis 30 ppm, bezogen auf das Produkt hinzugegeben.

Die vorliegende Erfindung betrifft allgemein ein Verfahren zur Verminderung mikrobiellen Befalls eines Produktes. Unter "zur Verminderung mikrobiellen Befalls eines Produktes" ist im Sinne der Erfindung zu verstehen, dass durch Einbringen einer Menge 5-Chlor-2-methyl-4-isothiazolin-3-ons mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons, in das Produkt das mikrobielle Wachstum der in den jeweiligen Produkten enthaltenen Mikroorganismen nachweislich verlangsamt bzw. gänzlich unterbunden wird.

In Verfahrensschritt (B) werden dem Produkt 1 bis 100 ppm, bevorzugt 5 bis 50 ppm, besonders bevorzugt 5 bis 30 ppm 5-Chlor-2-methyl-4-isothiazolin-3-on mit einem Gehalt an 2-Methyl-4-isothiazolin-3-on im Bereich von 0 bis 2 Gew.-%, bevorzugt mit einem Gehalt an 2-Methyl-4-isothiazolin-3-on im Bereich von 0 bis 1 Gew.-%, bezogen auf den Gesamtanteil des 5-Chlor-2-methyl-4-isothiazolin-3-ons, hinzugegeben. Hierdurch wird ein mit 5-Chlor-2-methyl-4-isothiazolin-3-on konserviertes Produkt erhalten, dessen Konservierungsmittel zu jedem gewünschten Zeitpunkt auf einfache Art und Weise in Verfahrensschritt (C) gezielt zersetzt werden kann.

Im Rahmen von Verfahrensschritt (C) wird das in Verfahrensschritt (B) hinzugegebene 5-Chlor-2-methyl-4-isothiazolin-3 mit Hilfe wenigstens einer 5-Chlor-2-methyl-4-isothiazolon-zersetzenden Verbindung die ausgewählt ist aus der Gruppe bestehend aus Cystein, Mercaptoethanol, Mercaptopropionsäure, Methylmercaptopropionat, Glutathion, Thioglycolat, Natriumthiosulfat, Natriumbisulfit, Pyrithion, Mercaptopyridin, Dithiothreitol, Mercaptoethansulfonat, und Natrium Formaldehyd Sulfoxylat, zersetzt bzw. abgebaut.

Bevorzugt wird das 5-Chlor-2-methyl-4-isothiazolon dabei derart abgebaut bzw. zersetzt, so dass der Gehalt an 5-Chlor-2-methyl-4-isothiazolon in dem Produkt innerhalb eines Zeitraums von weniger als 24 Stunden nach Zugabe der wenigstens einen 5-Chlor-2-methyl-4-isothiazolon-zersetzenden Verbindung, bezogen auf das gesamte Produkt, nur noch in einem Bereich von 0 bis 0,5 ppm, bevorzugt im Bereich von 0 bis 0,1 ppm liegt.

"Zersetzung des 5-Chlor-2-methyl-4-isothiazolons" bedeutet im Rahmen der vorliegenden Erfindung, dass das 5-Chlor-2-methyl-4-isothiazolon in Verfahrensschritt (C) innerhalb eines Zeitraums von bis zu 24 Stunden, bevorzugt innerhalb eines Zeitraums von 0,5 bis 12 Stunden, besonders bevorzugt innerhalb eines Zeitraums von 2 bis 6 Stunden, irreversibel zersetzt beziehungsweise abgebaut wird, so dass nach diesem Zeitraum der Gehalt an 5-Chlor-2-methyl-4-isothiazolon, bezogen auf das Produkt, im Bereich von 0 bis 0,5 ppm, besonders bevorzugt im Bereich von 0 bis 0,1 ppm liegt.

Innerhalb eines Zeitraums von bis zu 24 Stunden bedeutet dabei, dass das 5-Chlor-2-methyl-4-isothiazolon, das in Verfahrensschritt (B) hinzugegeben wurde innerhalb von 24 Stunden ab dem Zeitpunkt des Kontakts mit der wenigstens einen 5-Chlor-2-methyl-4-isothiazolon-zersetzenden Verbindung zersetzt wird, so das der Gesamtgehalt an 5-Chlor-2-methyl-4-isothiazolon nach diesen 24 Stunden im Bereich von 0 bis 0,5 ppm, bezogen auf das Produkt, liegt.

Mittel zur Zersetzung des 5-Chlor-2-methyl-4-isothiazolons bedeutet im Rahmen der vorliegenden Erfindung eine Verbindung, die durch chemische Reaktion das 5-Chlor-2-methyl-4-isothiazolon zersetzt bzw. inaktiviert. Das Mittel zur Zersetzung des 5-Chlor-2-methyl-4-isothiazolons bewirkt dabei, dass das in dem Produkt enthaltene 5-Chlor-2-methyl-4-isothiazolon innerhalb der vorstehend definierten Zeiträume auf den Gehalt im Bereich von 0 bis 0,5 ppm reduziert wird. Derartige Mittel bzw. Verbindungen sind dem Fachmann bekannt. Diese auszuwählen ist daher übliches fachmännisches Tun.

Gemäß der Erfindung handelt es sich bei dem im Verfahrensschritt (C) eingesetzten Mittel zur Zersetzung des 5-Chlor-2-methyl-4-isothiazolons um wenigstens eine Verbindung, die ausgewählt ist aus der Gruppe bestehend aus Cystein, Mercaptoethanol, Mercaptopropionsäure, Methylmercaptopropionat, Glutathion, Thioglycolat, Natriumthiosulfat, Natriumbisulfit, Pyrithion, Mercaptopyridin, Dithiothreitol, Mercaptoethansulfonat, und Natrium Formaldehyd Sulfoxylat. Gemäß einer besonders bevorzugten Ausführungsform der Erfindung handelt es sich bei dem Mittel zur Zersetzung des 5-Chlor-2-methyl-4-isothiazolons um Cystein.

Die Menge, der zur Zersetzung des 5-Chlor-2-methyl-4-isothiazolons verwendeten Verbindung(en) bzw. deren molares Verhältnis zu dem in den Produkten enthaltenen 5-Chlor-2-methyl-4-isothiazolon kann über weite Bereiche hinweg variieren. Üblicherweise liegt das molare Verhältnis des 5-Chlor-2-methyl-4-isothiazolons zu der wenigstens einen Verbindung mit der dies zersetzt wird im Bereich von 20:1 bis 1:20, bevorzugt im Bereich von 5:1 bis 1:5, besonders bevorzugt im Bereich von 2:1 bis 1:2.

Gemäß einer bevorzugten Ausführungsform der Erfindung ist das erfindungsgemäße Verfahren dadurch gekennzeichnet, dass zur Zersetzung des 5-Chlor-2-methyl-4-isothiazolons in Verfahrensschritt (C) Cystein in einer Menge im Bereich von 1 bis 200 ppm, bevorzugt 5 bis 25 ppm, bezogen auf das Produkt verwendet wird.

Nach der Zersetzung des 5-Chlor-2-methyl-4-isothiazolin-3-ons in Verfahrensschritt (C) ist das Produkt zwar idealerweise frei von mikrobiellem Befall, aber möglicherweise aufgrund des nun fehlenden Konservierungsmittels noch nicht gegen neu eingetragene Keime geschützt.

Gemäß einer alternativen Ausführungsform der Erfindung wird im Rahmen des erfindungsgemäßen Verfahrens in einem Verfahrensschritt (D) der pH-Wert in dem zu konservierenden Produkt auf einen pH-Wert im Bereich von 9,5 bis 12, bevorzugt auf einen pH-Wert im Bereich von 10,5 bis 11,5 eingestellt. Die Einstellung des pH-Wertes erfolgt bevorzugt durch Zugabe von NaOH und/oder KOH. Im Falle einer Dispersionsfarbe konnte die Anmelderin zeigen, dass diese nach der Zersetzung des 5-Chlor-2-methyl-4-isothiazolin-3-ons und Einstellung des pH-Wertes auf einen pH-Wert im Bereich von 9,5 bis 12 eine Lagerstabilität von mindestens 6 Monaten besitzt.

Gemäß der Erfindung wird in Verfahrensschritt (D) wenigstens ein weiteres Biozid ausgewählt aus der Gruppe bestehend aus 1,2-Benzisothiazolin-3-on in einer Menge von 1 bis 1.000 ppm, 2,2-Dibrom-3-nitrilpropionamid in einer Menge im Bereich von 1 bis 2.500 ppm, 2,2-Dibrommalonamid, Tetramethylolacetylendiharnstoff, Formaldehyd, Glutaraldehyd, Phenoxyethanol, 2-Brom-2-nitropropan-1,3-diol in einer Menge im Bereich von 1 bis 2.000 ppm, Zinkpyrithion in einer Menge im Bereich von 1 bis 2.500 ppm, Natriumpyrithion, Benzylalkohol, 3-Iodpropargyl-N-butylcarbamat, 2-n-Octyl-4-isothiazolin-3-on, 4,5-Dichlor-2-n-octyl-4-isothiazolin-3-on, einer Silberquelle in einer Menge im Bereich von 1 bis 500 ppm, 2-Methyl-1,2-Benzisothiazolin-3-on, Ethylhexylglycerin, 1,2-Octandiol, 1,2-Hexandiol, 1,2-Pentandiol, 1,2-Decandiol, p-Hydroxybenzoesäurepropylester, Sorbinsäure, Benzoesäure, Ascorbinsäure, Benzalkoniumchlorid, Dimethyldidodecylammoniumchlorid, Terbutryn, Diuron, Carbendazim, Tebuconazol und o-Phenylphenol dem Produkt hinzugegeben. Die vorstehend angegebenen Mengen beziehen sich dabei auf den Anteil des jeweiligen Biozids in Bezug auf das Produkt.

"Wenigstens ein weiteres Biozid" bedeutet im Rahmen der vorliegenden Erfindung, dass eine einziges Biozid, oder mehrere, also zwei, drei, vier, fünf oder mehr Biozide in Verfahrensschritt (D) hinzugegeben werden.

Gemäß einer bevorzugten Ausfiihrungsform der Erfindung wird in Verfahrensschritt (D) wenigstens ein weiteres Biozid ausgewählt aus der Gruppe bestehend aus 2,2-Dibrommalonamid, Tetramethylolacetylendiharnstoff, Formaldehyd, Glutaraldehyd, Phenoxyethanol, Natriumpyrithion, Benzylalkohol, 3-Iodpropargyl-N-butylcarbamat, 2-n-Octyl-4-isothiazolin-3-on, 4,5-Dichlor-2-n-octyl-4-isothiazolin-3-on, 2-Methyl-1,2-Benzisothiazolin-3-on, Ethylhexylglycerin, 1,2-Octandiol, 1,2-Hexandiol, 1,2-Pentandiol, 1,2-Decandiol, p-Hydroxybenzoesäurepropylester, Sorbinsäure, Benzoesäure, Ascorbinsäure, Benzalkoniumchlorid, Dimethyldidodecylammoniumchlorid, Terbutryn, Diuron, Carbendazim, Tebuconazol und o-Phenylphenol dem Produkt hinzugegeben. Silberquelle bedeutet im Rahmend er vorliegenden Erfindung Verbindungen ausgewählt aus elementarem Silber, Silbersalzen, Silberoxid, Silberhydroxid, Silbersulfat, Silberchlorid, Silberkomplexen und Kombinationen davon.

Das in Verfahrensschritt (D) hinzugegebene Biozid dient der Nachkonservierung der ursprünglich mit 5-Chlor-2-methyl-4-isothiazolin-3-on konservierten Produkte. Durch die Zersetzung des 5-Chlor-2-methyl-4-isothiazolin-3-ons in Verfahrensschritt (C) sind die Produkte zwar idealerweise frei von mikrobiellem Befall, aber möglicherweise aufgrund des nun fehlenden Konservierungsmittels noch nicht ausreichend gegen neu eingetragene Keime geschützt. Um diesen Schutz zu gewährleisten wird in Verfahrensschritt (D) wenigstens ein Biozid aus der vorstehend wiedergegebenen Gruppe zugegeben.

Gemäß einer bevorzugten Ausführungsform der Erfindung ist das erfindungsgemäße Verfahren dadurch gekennzeichnet, dass Verfahrensschritt (D):
das 1,2-Benzisothiazolin-3-on in einer Menge von 1 bis 1.000 ppm,
das 2,2-Dibrom-3-nitrilpropionamid in einer Menge im Bereich von 1 bis 2.500 ppm,
das 2-Brom-2-nitropropan-1,3-diol in einer Menge im Bereich von 1 bis 2.000 ppm,
das Zinkpyrithion in einer Menge im Bereich von 1 bis 2.500 ppm,
elementares Silber in einer Menge im Bereich von 1 bis 500 ppm,
Silberoxyd in einer Menge im Bereich von 1 bis 500 ppm,
Silberchlorid in einer Menge im Bereich von 1 bis 500 ppm,
das 2,2-Dibrommalonamid in einer Menge im Bereich von 1 bis 2.500 ppm,
der Tetramethylolacetylendiharnstoff in einer Menge im Bereich von 5 bis 5.000 ppm,
der Formaldehyd in einer Menge im Bereich von 5 bis 500 ppm,
der Glutaraldehyd in einer Menge im Bereich von 5 bis 500 ppm,
das Phenoxyethanol in einer Menge im Bereich von 10 bis 25.000 ppm,
das 2-Brom-2-nitropropan-1,3-diol in einer Menge im Bereich von 1 bis 2.000 ppm,
das Natriumpyrithion in einer Menge im Bereich von 1 bis 2.500 ppm
der Benzylalkohol in einer Menge im Bereich von 10 bis 25.000 ppm,
das 3-Iodpropargyl-N-butylcarbamat in einer Menge im Bereich von 10 bis 2.000 ppm,
das 2-n-Octyl-4-isothiazolin-3-on in einer Menge im Bereich von 10 bis 2.000 ppm,
das 4,5-Dichlor-2-n-octyl-4-isothiazolin-3-on in einer Menge im Bereich von 10 bis 2.000 ppm,
das 2-Methyl-1,2-Benzisothiazolin-3-on in einer Menge im Bereich von 1 bis 1.000 ppm,
das Ethylhexylglycerin in einer Menge im Bereich von 10 bis 20.000 ppm,
das 1,2-Pentandiol in einer Menge im Bereich von 10 bis 20.000 ppm,
das 1,2-Hexandiol in einer Menge im Bereich von 10 bis 20.000 ppm,
das 1,2-Octandiol in einer Menge im Bereich von 10 bis 2.000 ppm,
das 1,2-Decandiol in einer Menge im Bereich von 10 bis 20.000 ppm
der p-Hydroxybenzoesäurepropylester in einer Menge im Bereich von 10 bis 10.000 ppm,
die Sorbinsäure in einer Menge im Bereich von 10 bis 10.000 ppm,
die Benzoesäure in einer Menge im Bereich von 10 bis 10.000 ppm,
die Ascorbinsäure in einer Menge im Bereich von 10 bis 10.000 ppm,
das Benzalkoniumchlorid in einer Menge im Bereich von 10 bis 5.000 ppm,
das Dimethyldidodecylammoniumchlorid in einer Menge im Bereich von 10 bis 5.000 ppm,
das Terbutryn in einer Menge im Bereich von 10 bis 2.000 ppm,
das Diuron in einer Menge im Bereich von 10 bis 2.000 ppm,
das Carbendazim in einer Menge im Bereich von 10 bis 2.000 ppm,
das Tebuconazol in einer Menge im Bereich von 10 bis 2.000 ppm, und/oder
das o-Phenylphenol in einer Menge im Bereich von 1 bis 10.000 ppm,
jeweils bezogen auf das zu konservierende Produkt, hinzugegeben wird bzw. werden.

Im Rahmen des erfindungsgemäßen Verfahrens kann dabei eines der vorstehend angegebenen Biozide in der in Bezug auf das zu konservierende Produkt angegebenen Menge dem Produkt in Verfahrensschritt (D) hinzugegeben werden. Es können aber auch mehrere, also zwei, drei, vier und mehr der vorstehend angegebenen Biozide in der in Bezug auf das zu konservierende Produkt angegebenen Menge dem Produkt in Verfahrensschritt (D) hinzugegeben werden.

Gemäß einer bevorzugten Ausführungsform der Erfindung wird in einem weiteren Verfahrensschritt, Verfahrensschritt (E), eine Komponente ausgewählt aus der Gruppe Ethylendiamintetraacetat, einer Zinkquelle und einer Lithiumquelle dem Produkt hinzugegeben. Die Zugabe der weiteren Komponente in Verfahrensschritt (D) bewirkt dabei eine Steigerung der Wirksamkeit des wenigstens einen in Verfahrensschritt (D) hinzugegebenen Biozids.

Gemäß einer bevorzugten Ausführungsform der Erfindung wird in Verfahrensschritt (E) wenigstens eine Zinkverbindung ausgewählt aus der Gruppe bestehend aus Zinkoxid, Zinkchlorid, Zinksulfat, Zinkphosphat, Zinkhydroxid, Zinkcarbonat, Zinkascorbat, Zinkdehydracetat und Zinkcarboxylat dem Produkt in einer Menge im Bereich von 10 bis 5.000 ppm, bezogen auf das Produkt, hinzugegeben. Gemäß einer besonders bevorzugten Ausführungsform der Erfindung wird in Verfahrensschritt (E) wenigstens eine Zinkverbindung ausgewählt aus Zinkoxyd, Zinkchlorid und Zinkcarbonat, dem Produkt hinzugegeben, bevorzugt im Bereich von 10 bis 5.000 ppm, bezogen auf das Produkt.

Gemäß einer bevorzugten Ausführungsform der Erfindung wird in Verfahrensschritt (E) wenigstens eine Lithiumverbindung, bevorzugt ausgewählt aus der Gruppe bestehend aus Lithiumchlorid, Lithiumcarbonat, Lithiumsulfat und Lithiumhydroxid in einer Menge im Bereich von 10 bis 5.000 ppm, bezogen auf das Produkt, hinzugegeben. Gemäß einer besonders bevorzugten Ausführungsform der Erfindung wird in Verfahrensschritt (E) wenigstens eine Lithiumverbindung ausgewählt aus Lithiumchlorid und Lithiumcarbonat dem Produkt hinzugegeben, bevorzugt im Bereich von 10 bis 5.000 ppm, bezogen auf das Produkt.

**Die vorliegende Erfindung wird anhand des nachfolgend dargestellten Beispiels näher beschrieben:**
Zu einer konservierungsmittelfreien Styrolacrylatdispersion wurden 20 ppm 5-Chlor-2-methylisothiazolin-3-on, mit einem Gehalt an 2-Methylisothiazolin-3-on von < 1Gew.-%, hinzugegeben. Die so konservierte Styrolacrylatdispersion wurde dann zur Herstellung einer Dispersionsfarbe auf Wasserbasis verwendet. Die hergestellte Farbe hatte folgende Zusammensetzung:
25,7 Gew.-% Wasser
0,2 Gew.-% Netz- und Dispergiermittel auf Acrylatbasis
0,2 Gew.- % Entschäumer auf Mineralölbasis
2,0 Gew.-% Wasserenthärter (Natriumpolyphosphat)
0,2 Gew.-% Ammoniak
4,0 Gew.-% Titanoxid (Pigment)
51,0 Gew.-% Calciumcarbonat (Füllstoff)
5,0 Gew.-% Talcum (Füllstoff)
0,4 Gew.-% % Celluloseether
2,0 Gew.-% organisches Lösemittel zur Erniedrigung der Mindestfilmbildungstemperatur
9,0 Gew.-% der mit 20 ppm 5-Chlor-2-methylisothiazolin-3-on konservierten Styrolacrylatdispersion
20 ppm 5-Chlor-2-methylisothiazolin-3-on, mit einem Gehalt an 2-Methylisothiazolin-3-on von < 1Gew.-%

Mit Hilfe von Mikrobiologischen Untersuchungen konnte in der Dispersionsfarbe kein mikrobielles Wachstum festgestellt werden, wohingegen in einzelnen Komponenten mikrobielles Wachstum nachweisbar war. Das hochwirksame 5-Chlor-2-methylisothiazolin-3-on war daher ausreichend, um die über die einzelnen Komponenten der Farbe eingeschleppten Mikroorganismen vollständig abzutöten.

Um aus der Dispersionsfarbe, die signifikante Mengen an 5-Chlor-2-methylisothiazolin-3-on enthielt, eine Farbe herzustellen, die für Allergiker im Hinblick auf darin enthaltenes 5-Chlor-2-methylisothiazolin-3-on und 2-Methylisothiazolin-3-on unbedenklich ist, herzustellen, wurden diese Isothiazolin-3-one durch Hinzugeben von 50 ppm Cystein, bezogen auf die Dispersionsfarbe zersetzt. Bereits nach 3 Stunden war in der Dispersionsfarbe mittels HPLC kein 5-Chlor-2-methylisothiazolin-3-on mehr nachweisbar.

Die so hergestellte Farbe war nun zwar durch die Verwendung des wirksamen Breitbandbiozids 5-Chlor-2-methylisothiazolin-3-on frei von Mikroorganismen, in Folge der Zersetzung des Biozids durch das Cystein jedoch anfällig bzgl. neu eingeschleppter Mikroorganismen, die während der Lagerung in die Farbe gelangen können.

Um die Farbe während der Lagerung gegen derartigen mikrobiellen Befall zu schützen, wurden daher zur Nachkonservierung, bezogen auf die Dispersionsfarbe 50 ppm 2-Methyl-1,2-Benzisothiazolin-3-on und 10 ppm Zinkoxid hinzugegeben. Die so hergestellte Farbe wies eine Lagerstabilität von mindestens 6 Monaten auf.

## Patentansprüche

1. Verfahren zur Verminderung mikrobiellen Befalls eines Produktes umfassend die Schritte:
(A) Bereitstellen eines Produktes, und
(B) Hinzugeben von 1 bis 100 ppm 5-Chlor-2-methyl-4-isothiazolin-3-on mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons,
(C) Zersetzen des 5-Chlor-2-methyl-4-isothiazolin-3-ons mit Hilfe wenigstens einer Verbindung, die ausgewählt ist aus der Gruppe bestehend aus Cystein, Mercaptoethanol, Mercaptopropionsäure, Methylmercaptopropionat, Glutathion, Thioglycolat, Natriumthiosulfat, Natriumbisulfit, Pyrithion, Mercaptopyridin, Dithiothreitol, Mercaptoethansulfonat, und Natrium Formaldehyd Sulfoxylat und
(D) Hinzugeben wenigstens eines Biozids ausgewählt aus der Gruppe bestehend aus 1,2-Benzisothiazolin-3-on in einer Menge von 1 bis 1.000 ppm, 2,2-Dibrom-3-nitrilpropionamid in einer Menge im Bereich von 1 bis 2.500 ppm, 2,2-Dibrommalonamid, Tetramethylolacetylendiharnstoff, Formaldehyd, Glutaraldehyd, Phenoxyethanol, 2-Brom-2-nitropropan-1,3-diol in einer Menge im Bereich von 1 bis 2.000 ppm, Zinkpyrithion in einer Menge im Bereich von 1 bis 2.500 ppm, Natriumpyrithion, Benzylalkohol, 3-Iodpropargyl-N-butylcarbamat, 2-n-Octyl-4-isothiazolin-3-on, 4,5-Dichlor-2-n-octyl-4-isothiazolin-3-on, einer Silberquelle in einer Menge im Bereich von 1 bis 500 ppm, 2-Methyl-1,2-Benzisothiazolin-3-on, Ethylhexylglycerin, 1,2-Octandiol, 1,2-Hexandiol, 1,2-Pentandiol, 1,2-Decandiol, p-Hydroxybenzoesäurepropylester, Sorbinsäure, Benzoesäure, Ascorbinsäure, Benzalkoniumchlorid, Dimethyldidodecylammoniumchlorid, Terbutryn, Diuron, Carbendazim, Tebuconazol und o-Phenylphenol, ausgenommen ein Verfahren, in dessen Rahmen zu einer konservierungsmittelfreien Styrolacrylatdispersion 20 ppm 5-Chlor-2-methylisothiazolin-3-on, mit einem Gehalt an 2-Methylisothiazolin-3-on von < 1Gew.-%, hinzugegeben werden und die so konservierte Styrolacrylatdispersion dann zur Herstellung einer Dispersionsfarbe auf Wasserbasis verwendet wird, wobei die hergestellte Farbe folgende Zusammensetzung hat:
25,7 Gew.-% Wasser
0,2 Gew.-% Netz- und Dispergiermittel auf Acrylatbasis
0,2 Gew.- % Entschäumer auf Mineralölbasis
2,0 Gew.-% Wasserenthärter (Natriumpolyphosphat) 0,2 Gew.-% Ammoniak
4,0 Gew.-% Titanoxid (Pigment)
51,0 Gew.-% Calciumcarbonat (Füllstoff)
5,0 Gew.-% Talcum (Füllstoff)
0,4 Gew.-% % Celluloseether
2,0 Gew.-% organisches Lösemittel zur Erniedrigung der Mindestfilmbildungstemperatur
9,0 Gew.-% der mit 20 ppm 5-Chlor-2-methylisothiazolin-3-on konservierten Styrolacrylatdispersion
20 ppm 5-Chlor-2-methylisothiazolin-3-on, mit einem Gehalt an 2-Methylisothiazolin-3-on von < 1Gew.-%,
wobei nach der Herstellung der Dispersionsfarbe die Isothiazolin-3-one durch Hinzugeben von 50 ppm Cystein, bezogen auf die Dispersionsfarbe, zersetzt werden und zur Nachkonservierung, bezogen auf die Dispersionsfarbe 50 ppm 1,2-Benzisothiazolin-3-on, 100 ppm Zink-2-mercaptopyridin-N-oxid und 10 ppm Zinkoxid hinzugegeben werden.

2. Verfahren nach Anspruch 1, **dadurch gekennzeichnet, dass** in Verfahrensschritt (D):
das 2,2-Dibrommalonamid in einer Menge im Bereich von 1 bis 2.500 ppm,
der Tetramethylolacetylendiharnstoff in einer Menge im Bereich von 5 bis 5.000 ppm,
der Formaldehyd in einer Menge im Bereich von 5 bis 500 ppm,
der Glutaraldehyd in einer Menge im Bereich von 5 bis 500 ppm,
das Phenoxyethanol in einer Menge im Bereich von 10 bis 25.000 ppm,
das 2-Brom-2-nitropropan-1,3-diol in einer Menge im Bereich von 1 bis 2.000 ppm,
das Natriumpyrithion in einer Menge im Bereich von 1 bis 2.500 ppm der Benzylalkohol in einer Menge im Bereich von 10 bis 25.000 ppm,
das 3-Iodpropargyl-N-butylcarbamat in einer Menge im Bereich von 10 bis 2.000 ppm,
das 2-n-Octyl-4-isothiazolin-3-on in einer Menge im Bereich von 10 bis 2.000 ppm,
das 4,5-Dichlor-2-n-octyl-4-isothiazolin-3-on in einer Menge im Bereich von 10 bis 2.000 ppm,
das 2-Methyl-1,2-Benzisothiazolin-3-on in einer Menge im Bereich von 1 bis 1.000 ppm,
elementares Silber in einer Menge im Bereich von 1 bis 500 ppm,
Silberoxyd in einer Menge im Bereich von 1 bis 500 ppm,
Silberchlorid in einer Menge im Bereich von 1 bis 500 ppm,
das Ethylhexylglycerin in einer Menge im Bereich von 10 bis 20.000 ppm,
das 1,2-Pentandiol in einer Menge im Bereich von 10 bis 20.000 ppm,
das 1,2-Hexandiol in einer Menge im Bereich von 10 bis 20.000 ppm,
das 1,2-Octandiol in einer Menge im Bereich von 10 bis 2.000 ppm
das 1,2-Decandiol in einer Menge im Bereich von 10 bis 20.000 ppm
der p-Hydroxybenzoesäurepropylester in einer Menge im Bereich von 10 bis 10.000 ppm,
die Sorbinsäure in einer Menge im Bereich von 10 bis 10.000 ppm,
die Benzoesäure in einer Menge im Bereich von 10 bis 10.000 ppm,
die Ascorbinsäure in einer Menge im Bereich von 10 bis 10.000 ppm,
das Benzalkoniumchlorid in einer Menge im Bereich von 10 bis 5.000 ppm,
das Dimethyldidodecylammoniumchlorid in einer Menge im Bereich von 10 bis 5.000 ppm,
das Terbutryn in einer Menge im Bereich von 10 bis 2.000 ppm,
das Diuron in einer Menge im Bereich von 10 bis 2.000 ppm,
das Carbendazim in einer Menge im Bereich von 10 bis 2.000 ppm,
das Tebuconazol in einer Menge im Bereich von 10 bis 2.000 ppm, und/oder das o-Phenylphenol in einer Menge im Bereich von 1 bis 10.000 ppm,
jeweils bezogen auf das zu konservierende Produkt, hinzugegeben wird bzw.
werden.

3. Verfahren nach einem der Ansprüche 1 oder 2, **dadurch gekennzeichnet**, das in einem weiteren Verfahrensschritt (E) eine Komponente ausgewählt aus der Gruppe Ethylendiamintetraacetat, einer Zinkquelle und einer Lithiumquelle hinzugegeben wird.

4. Verfahren nach Anspruch 3, **dadurch gekennzeichnet, dass** die Zinkquelle in einer Menge im Bereich von 10 bis 5.000 ppm, bezogen auf das Produkt hinzugegeben wird und wenigstens eine Verbindung ausgewählt aus der Gruppe bestehend aus Zinkoxid, Zinkchlorid, Zinksulfat, Zinkphosphat, Zinkhydroxid, Zinkcarbonat, Zinkascorbat, Zinkdehydracetat und Zinkcarboxylat ist.

5. Verfahren nach Anspruch 3, **dadurch gekennzeichnet, dass** die Lithiumquelle in einer Menge im Bereich von 10 bis 5.000 ppm, bezogen auf das Produkt hinzugegeben wird, und wenigstens eine Verbindung ausgewählt aus der Gruppe bestehend aus Lithiumchlorid, Lithiumcarbonat, Lithiumsulfat und Lithiumhydroxid ist.

6. Verfahren nach einem der Ansprüche 1 bis 5, **dadurch gekennzeichnet, dass** in Verfahrensschritt (A) ein Produkt mit einem Gehalt an 2-Methyl-4-isothiazolin-3-on im Bereich von 0 bis 1 ppm bereitgestellt wird.

7. Verfahren nach einem der Ansprüche 1 bis 6, **dadurch gekennzeichnet, dass** das Produkt ausgewählt ist aus der Gruppe bestehend aus Farben, Innenraumfarben, Lacken, Lasuren, Putzen, Innenputzen, Emulsionen, Latices, Polymerdispersionen, Ligninsulfonaten, Kreideaufschlämmungen, mineralischen Slurries, keramischen Massen, Klebstoffen, Dichtstoffen, caseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithografischen Flüssigkeiten, Verdickern, kosmetischen Produkten, Toilettenartikeln, Wasserkreisläufen, Flüssigkeiten bei der Papierverarbeitung, Flüssigkeiten bei der Lederherstellung, Flüssigkeiten bei der Textilherstellung, Bohr- und Schneidölen, hydraulischen Flüssigkeiten und Kühlschmierstoffen.

## Claims

1. A method for reducing microbial attack of a product comprising the steps of:
(A) providing a product; and
(B) adding from 1 to 100 ppm 5-chloro-2-methyl-4-isothiazolin-3-one having a content of 2-methyl-4-isothiazolin-3-one in the range from 0 to 2 wt%, based on the total proportion of the 5-chloro-2-methyl-4-isothiazolin-3-one;
(C) decomposing said 5-chloro-2-methyl-4-isothiazolin-3-one using at least one compound which is selected from the group consisting of cysteine, mercaptoethanol, mercaptopropionic acid, methyl mercaptopropionate, glutathione, thioglycolate, sodium thiosulfate, sodium bisulfite, pyrithione, mercaptopyridine, dithiothreitol, mercaptoethane sulfonate, and sodium formaldehyde sulfoxylate; and
(D) adding at least one biocide selected from the group consisting of 1,2-benzisothiazolin-3-one in an amount of 1 to 1,000 ppm; 2,2-dibromo-3-nitrilopropionamide in an amount ranging from 1 to 2,500 ppm; 2,2-dibromomalonamide, tetramethylol acetylenediurea, formaldehyde, glutaraldehyde, phenoxyethanol, 2-bromo-2-nitropropan-1,3-diol in an amount ranging from 1 to 2,000 ppm; zinc pyrithione in an amount ranging from 1 to 2,500 ppm; sodium pyrithione, benzyl alcohol, 3-iodopropargyl-N-butylcarbamate, 2-n-octyl-4-isothiazolin-3-one, 4,5-dichloro-2-n-octyl-4-isothiazolin-3-one, a silver source in an amount ranging from 1 to 500 ppm; 2-methyl-1,2-benzisothiazolin-3-one, ethylhexylglycerin, 1,2-octanediol, 1,2-hexanediol, 1,2-pentanediol, 1,2-decanediol, p-hydroxybenzoic acid propyl ester, sorbic acid, benzoic acid, ascorbic acid, benzalkonium chloride, dimethyl didodecyl ammonium chloride, terbutryn, diuron, carbendazim, tebuconazole, and o-phenylphenol,
with the exception of a process in which 20 ppm of 5-chloro-2-methylisothiazolin-3-one, having a 2-methylisothiazolin-3-one content of <1% wt, are added to a preservative-free styrene-acrylate dispersion and the thus preserved styrene acrylate dispersion is then used for producing a water-based emulsion paint, the paint produced having the following composition:
25.7 wt % water
0.2 wt % acrylate-based wetting and dispersing agent
0.2 wt % mineral oil-based defoamer
2.0 wt % water softener (sodium polyphosphate)
0.2 wt % ammonia
4.0 wt % titanium oxide (pigment)
51.0 wt % calcium carbonate (filler)
5.0 wt % talc (filler)
0.4 wt %% cellulose ether
2.0 wt % organic solvent for lowering the minimum film-forming temperature
9.0 wt % the styrene-acrylate dispersion preserved with 20 ppm of 5-chloro-2-methylisothiazolin-3-one
20 ppm 5-chloro-2-methylisothiazolin-3-one, having a 2-methylisothiazolin-3-one content of < 1 wt %,
whereby after the emulsion paint has been produced, the isothiazolin-3-ones are decomposed by adding 50 ppm cysteine, based on the emulsion paint, and for subsequent preservation, based on the emulsion paint, 50 ppm 1,2-benzisothiazolin-3-one, 100 ppm zinc 2-mercaptopyridine-N-oxide and 10 ppm zinc oxide are added.

2. The method according to claim 1, **characterized in that** the following is/are added in method step (D):
said 2,2-dibromomalonamide in an amount ranging from 1 to 2,500 ppm;
said tetramethylol acetylenediurea in an amount ranging from 5 to 5,000 ppm;
said formaldehyde in an amount ranging from 5 to 500 ppm;
said glutaraldehyde in an amount ranging from 5 to 500 ppm;
said phenoxyethanol in an amount ranging from 10 to 25,000 ppm;
said 2-bromo-2-nitropropane-1,3-diol in an amount ranging from 1 to 2,000 ppm;
said sodium pyrithione in an amount ranging from 1 to 2,500 ppm;
said benzyl alcohol in an amount ranging from 10 to 25,000 ppm;
said 3-iodopropargyl-N-butylcarbamate in an amount ranging from 10 to 2,000 ppm;
said 2-n-octyl-4-isothiazolin-3-one in an amount ranging from 10 to 2,000 ppm;
said 4,5-dichloro-2-n-octyl-4-isothiazolin-3-one in an amount ranging from 10 to 2,000 ppm;
said 2-methyl-1.2-benzisothiazolin-3-one in an amount ranging from 1 to 1,000 ppm;
elemental silver in an amount ranging from 1 to 500 ppm;
silver oxide in an amount ranging from 1 to 500 ppm;
silver chloride in an amount ranging from 1 to 500 ppm;
said ethylhexylglycerin in an amount ranging from 10 to 20,000 ppm;
said 1,2-pentanediol in an amount ranging from 10 to 20,000 ppm;
said 1,2-hexanediol in an amount ranging from 10 to 20,000 ppm;
said 1,2-octanediol in an amount ranging from 10 to 2,000 ppm;
said 1,2-decanediol in an amount ranging from 10 to 20,000 ppm;
said p-hydroxybenzoic acid propyl ester in an amount ranging from 10 to 10,000 ppm;
said sorbic acid in an amount ranging from 10 to 10,000 ppm;
said benzoic acid in an amount ranging from 10 to 10,000 ppm;
said ascorbic acid in an amount ranging from 10 to 10,000 ppm;
said benzalkonium chloride in an amount ranging from 10 to 5,000 ppm;
said dimethyl didodecyl ammonium chloride in an amount ranging from 10 to 5,000 ppm;
said terbutryn in an amount ranging from 10 to 2,000 ppm;
said diuron in an amount ranging from 10 to 2,000 ppm;
said carbendazim in an amount ranging from 10 to 2,000 ppm;
said tebuconazole in an amount ranging from 10 to 2,000 ppm; and/or
said o-phenylphenol in an amount ranging from 1 to 10,000 ppm;
based on the product to be preserved in each case.

3. The method according to claim 1 or 2, **characterized in that** a component selected from the group ethylenediaminetetraacetate, a zinc source, and a lithium source is added in a further method step (E).

4. The method according to claim 3, **characterized in that** the zinc source is added in an amount ranging from 10 to 5000 ppm, based on the product, and at least one compound is selected from the group consisting of zinc oxide, zinc chloride, zinc sulfate, zinc phosphate, zinc hydroxide, zinc carbonate, zinc ascorbate, zinc dehydracetate, and zinc carboxylate.

5. The method according to claim 3, **characterized in that** the lithium source is added in an amount ranging from 10 to 5000 ppm, based on the product, and at least one compound is selected from the group consisting of lithium chloride, lithium carbonate, lithium sulfate, and lithium hydroxide.

6. The method according to any of claims 1 to 5, **characterized in that** a product containing 2-methyl-4-isothiazolin-3-one in the range from 0 to 1 ppm is provided in method step (A).

7. The method according to any of claims 1 to 6, **characterized in that** the product is selected from the group consisting of paints, interior paints, lacquers, varnishes, plasters, interior plasters, emulsions, lattices, polymer dispersions, lignosulfonates, chalk slurries, mineral slurries, ceramic compounds, adhesives, sealants, casein-containing products, starch-containing products, bitumen emulsions, surfactant solutions, fuels, cleaning agents, pigment pastes and pigment dispersions, inks, lithographic fluids, thickeners, cosmetic products, toiletries, water cycles, fluids in paper processing, fluids in leather production, fluids in textile production, drilling and cutting oils, hydraulic fluids, and coolants.

## Revendications

1. Procédé destiné à diminuer l'attaque microbienne d'un produit, comprenant les étapes de :
(A) mise à disposition d'un produit et
(B) ajout de 1 à 100 ppm de 5-chloro-2-méthyl-4-isothiazolin-3-one présentant une teneur en 2-méthyl-4-isothiazolin-3-one dans la plage de 0 à 2% en poids, par rapport à la proportion totale de la 5-chloro-2-méthyl-4-isothiazolin-3-one,
(C) décomposition de la 5-chloro-2-méthyl-4-isothiazolin-3-one à l'aide d'au moins un composé, qui est choisi dans le groupe constitué par la cystéine, le mercaptoéthanol, l'acide mercaptopropionique, le mercaptopropionate de méthyle, le glutathion, le thioglycolate, le thiosulfate de sodium, le bisulfite de sodium, la pyrithione, la mercaptopyridine, le dithiothréitol, le mercaptoéthanesulfonate et le formaldéhydesulfoxylate de sodium et
(D) ajout d'au moins un biocide choisi dans le groupe constitué par la 1,2-benzo-isothiazolin-3-one en une quantité de 1 à 1000 ppm, le 2,2-dibromo-3-nitrilpropionamide en une quantité dans la plage de 1 à 2500 ppm, le 2,2-dibromomalonamide, la tétraméthylolacétylène-di-urée, le formaldéhyde, le glutaraldéhyde, le phénoxyéthanol, le 2-bromo-2-nitropropane-1,3-diol en une quantité dans la plage de 1 à 2000 ppm, la pyrithione de zinc en une quantité dans la plage de 1 à 2500 ppm, la pyrithione de sodium, l'alcool benzylique, le N-butylcarbamate de 3-iodopropargyle, la 2-n-octyl-4-isothiazolin-3-one, la 4,5-dichloro-2-n-octyl-4-isothiazolin-3-one, une source d'argent en une quantité dans la plage de 1 à 500 ppm, la 2-méthyl-1,2-benzo-isothiazolin-3-one, l'éthylhexylglycérol, le 1,2-octanediol, le 1,2-hexanediol, le 1,2-pentanediol, le 1,2-décanediol, l'ester propylique de l'acide p-hydroxybenzoïque, l'acide sorbique, l'acide benzoïque, l'acide ascorbique, le chlorure de benzalconium, le chlorure de diméthyldidodécylammonium, la terbutryne, le diuron, la carbendazime, le tébuconazole et l'o-phénylphénol, à l'exception d'un procédé dans le cadre duquel on ajoute à une dispersion de styrène-acrylate exempte de conservateurs 20 ppm de 5-chloro-2-méthylisothiazolin-3-one, présentant une teneur en 2-méthylisothiazolin-3-one < 1% en poids et la dispersion de styrène-acrylate ainsi conservée est alors utilisée pour la préparation d'une peinture de dispersion à base d'eau, la peinture préparée présentant la composition suivante :
25,7% en poids d'eau
0,2% en poids d'agent mouillant et de dispersant à base acrylate
0,2% en poids d'antimousse à base d'huile minérale 2,0% en poids d'adoucisseur d'eau (polyphosphate de sodium)
0,2% en poids d'ammoniac
4,0% en poids d'oxyde de titane (pigment) 51,0% en poids de carbonate de calcium (charge)
5,0% en poids de talc ( charge)
0,4% en poids d'éther de cellulose
2,0% en poids de solvant organique destiné à abaisser la température filmogène minimale
9,0% en poids de la dispersion de styrène-acrylate conservée avec 20 ppm de 5-chloro-2-méthylisothiazolin-3-one
20 ppm de 5-chloro-2-méthylisothiazolin-3-one, présentant une teneur en 2-méthylisothiazolin-3-one < 1% en poids,
dans lequel, après la préparation de la peinture de dispersion, les isothiazolin-3-ones sont décomposées par ajout de 50 ppm de cystéine, par rapport à la peinture de dispersion et, pour la post-conservation, 50 ppm de 1,2-benzisothiazolin-3-one, 100 ppm de 2-mercaptopyridine-N-oxyde de zinc et 10 ppm d'oxyde de zinc, par rapport à la peinture de dispersion, sont ajoutés.

2. Procédé selon la revendication 1, **caractérisé en ce que**, dans l'étape de procédé (D) :
- le 2,2-dibromomalonamide est ajouté en une quantité dans la plage de 1 à 2500 ppm,
- la tétraméthylolacétylène-di-urée est ajoutée en une quantité dans la plage de 5 à 5000 ppm,
- le formaldéhyde est ajouté en une quantité dans la plage de 5 à 500 ppm,
- le glutaraldéhyde est ajouté en une quantité dans la plage de 5 à 500 ppm,
- le phénoxyéthanol est ajouté en une quantité dans la plage de 10 à 25.000 ppm,
- le 2-bromo-2-nitropropane-1,3-diol est ajouté en une quantité dans la plage de 1 à 2000 ppm,
- la pyrithione de sodium est ajoutée en une quantité dans la plage de 1 à 2500 ppm,
- l'alcool benzylique est ajouté en une quantité dans la plage de 10 à 25.000 ppm,
- le N-butylcarbamate de 3-iodopropargyle est ajouté en une quantité dans la plage de 10 à 2000 ppm,
- la 2-n-octyl-4-isothiazolin-3-one est ajoutée en une quantité de la plage dans 10 à 2000 ppm,
- la 4,5-dichloro-2-n-octyl-4-isothiazolin-3-one est ajoutée en une quantité dans la plage de 10 à 2000 ppm,
- la 2-méthyl-1,2-benzo-isothiazolin-3-one est ajoutée en une quantité dans la plage de 1 à 1000 ppm,
- l'argent élémentaire est ajouté en une quantité dans la plage de 1 à 500 ppm,
- l'oxyde d'argent est ajouté en une quantité dans la plage de 1 à 500 ppm,
- le chlorure d'argent est ajouté en une quantité dans la plage de 1 à 500 ppm,
- l'éthylhexylglycérol est ajouté en une quantité dans la plage de 10 à 20.000 ppm,
- le 1,2-pentanediol est ajouté en une quantité dans la plage de 10 à 20.000 ppm,
- le 1,2-hexanediol est ajouté en une quantité dans la plage de 10 à 20.000 ppm,
- le 1,2-octanediol est ajouté en une quantité dans la plage de 10 à 2000 ppm,
- le 1,2-décanediol est ajouté en une quantité dans la plage de 10 à 20.000 ppm,
- l'ester propylique de l'acide p-hydroxybenzoïque est ajouté en une quantité dans la plage de 10 à 10.000 ppm,
- l'acide sorbique est ajouté en une quantité dans la plage de 10 à 10.000 ppm,
- l'acide benzoïque est ajouté en une quantité dans la plage de 10 à 10.000 ppm,
- l'acide ascorbique est ajouté en une quantité dans la plage de 10 à 10.000 ppm,
- le chlorure de benzalconium est ajouté dans une quantité de la plage de 10 à 5000 ppm,
- le chlorure de diméthyldidodécylammonium est ajouté en une quantité dans la plage de 10 à 5000 ppm,
- la terbutryne est ajoutée en une quantité dans la plage de 10 à 2000 ppm,
- le diuron est ajouté en une quantité dans la plage de 10 à 2000 ppm,
- la carbendazime est ajoutée en une quantité dans la plage de 10 à 2000 ppm,
- le tébuconazole est ajouté en une quantité dans la plage de 10 à 2000 ppm et/ou
- l'o-phénylphénol est ajouté en une quantité dans la plage de 1 à 10.000 ppm,
à chaque fois par rapport au produit à conserver.

3. Procédé selon l'une des revendications 1 ou 2, **caractérisé en ce que**, dans une autre étape de procédé (E), un composant choisi dans le groupe constitué par l'éthylènediaminetétraacétate, une source de zinc et une source de lithium est ajouté.

4. Procédé selon la revendication 3, **caractérisé en ce que** la source de zinc est ajoutée en une quantité dans la plage de 10 à 5000 ppm, par rapport au produit, et est au moins un composé choisi dans le groupe constitué par l'oxyde de zinc, le chlorure de zinc, le sulfate de zinc, le phosphate de zinc, l'hydroxyde de zinc, le carbonate de zinc, l'ascorbate de zinc, le déhydroacétate de zinc et le carboxylate de zinc.

5. Procédé selon la revendication 3, **caractérisé en ce que** la source de lithium est ajoutée en une quantité dans la plage de 10 à 5000 ppm, par rapport au produit, et est au moins un composé choisi dans le groupe constitué par le chlorure de lithium, le carbonate de lithium, le sulfate de lithium et l'hydroxyde de lithium.

6. Procédé selon l'une des revendications 1 à 5, **caractérisé en ce que**, dans l'étape de procédé (A), un produit présentant une teneur en 2-méthyl-4-isothiazolin-3-one dans la plage de 0 à 1 ppm est mis à disposition.

7. Procédé selon l'une des revendications 1 à 6, **caractérisé en ce que** le produit est choisi dans le groupe constitué par les peintures, les peintures intérieures, les vernis, les lasures, les enduits, les enduits intérieurs, les émulsions, les latex, les dispersions polymères, les sulfonates de lignine, les suspensions de craie, les suspensions minérales, les masses céramiques, les adhésifs, les matériaux d'étanchéité, les produits contenant de la caséine, les produits contenant de l'amidon, les émulsions de bitume, les solutions tensioactives, les carburants, les agents de nettoyage, les pâtes pigmentaires et les dispersions pigmentaires, les encres, les liquides lithographiques, les épaississants, les produits cosmétiques, les articles de toilette, les circuits d'eau, les liquides lors de la transformation du papier, les liquides lors de la fabrication du cuir, les liquides lors de la fabrication de textiles, les huiles de forage et de coupe, les liquides hydrauliques et les lubrifiants de refroidissement.
